# EUROPÄISCHE PATENTSCHRIFT

(11) **EP 0 501 226 B1**
(45) Veröffentlichungstag und Bekanntmachung des Hinweises auf die Patenterteilung: **05.10.1994**
(21) Anmeldenummer: 92102309.9
(22) Anmeldetag: 12.02.1992
(51) Int. Cl.: B62D 29/00

(54) **Karosserie für Fahrzeuge und Verfahren zu deren Herstellung**
Car body for vehicles and procedure of its manufacture
Carrosserie pour véhicules et procédé de sa manufacture

(30) Priorität: 01.03.1991 DE 4106501
(43) Veröffentlichungstag der Anmeldung: 02.09.1992
(73) Patentinhaber: Bayerische Motoren Werke Aktiengesellschaft, 80788 München (DE)
(72) Erfinder: Christl, Wolfgang, Dr., W-8038 Alling (DE); Haug, Wolfram, W-8000 München 19 (DE)

(56) Entgegenhaltungen:
- EP-A- 0 303 431
- EP-B- 0 146 716
- AT-B- 343 490
- DE-A- 3 543 929
- DE-B- 2 701 905

## Beschreibung

Die Erfindung betrifft eine Karosserie für Fahrzeuge gemäß dem Oberbegriff des Anspruchs 1 sowie Verfahren zu deren Herstellung.

Aus der DE-A-27 01 905 ist ein stranggepreßtes Bauelement zum Aufbau von Wänden, insbesondere von Kraftfahrzeugen, bekannt. Insbesondere kann mit dem bekannten Bauelement ein Kastenaufbau hergestellt werden, wie er bei Lastkraftwagen zur Aufnahme des zu befördernden Gutes bekannt ist. Der aus der DE-A-27 01 905 bekannte Kastenaufbau ist jedoch nicht zur Übertragung der beim Fahren auftretenden Kräfte und den sich daraus ergebenden dynamischen Beanspruchungen geeignet. Diese Kräfte werden vielmehr durch eine separate Tragstruktur aufgenommen. Zu diesem Zweck sind die Seitenwände in Fahrtrichtung über Eckprofile mit den dazu senkrecht stehenden Seitenwände verbunden, wobei bei den Eckprofilen die entsprechenden Schnappanschlußelemente in Fahrtrichtung ausgerichtet sind. Die Anwendung dieser Art der Verbindung für eine tragende Struktur würde bei den beim Anfahren und beim Abbremsen entstehenden Kräften und Momenten kritisch sein. Problematisch wären bei einer tragenden Struktur diese Verbindungsstellen jedoch bei einem Zusammenstoß mit einem anderen Fahrzeug oder Gegenstand, da über diese Schnappverbindung die bei einem Zusammenstoß auftretenden hohen Kräfte nicht torsionssteif übertragbar sind.
Die durch die vorbekannte Schnappverbindung übertragbare dynamische Beanspruchung ist bestimmt durch die über die Schnappanschlußelemente oder Schenkel übertragbare Federkraft, die Reibzahl "µ" und die aneinander reibenden Flächen. Die Federkraft muß jedoch relativ klein gehalten sein, um noch mit vertretbaren Montagekräften arbeiten zu können. Die Reibzahl "µ" für die Reibung zwischen Aluminiumteilen ist niedrig. Aufgrund der Ausbildung der Schnappanschlußelemente liegt eine Linienberührung vor, so daß die aneinander reibenden Flächen vernachlässigbar sind. Insbesondere für die Sicherheitszelle eines Kraftfahrzeuges ist die Verwendung einer solchen Bauweise nicht übertragbar. Um eine ausreichende Federkraft zu erzeugen, sind die Schenkel der Schnappanschlußelemente relativ lang ausgebildet. Dadurch ist ein erhöhter Materialbedarf erforderlich, der ein zusätzliches Gewicht bedeutet.
Auch aus optischen Gesichtspunkten ist die aus der DE-A-27 01 905 bekannte Bauweise ungünstig, da an jeder Verbindungsstelle die umlaufenden Fugen sichtbar sind. Zudem sind mit den bekannten, geradverlaufenden Strangpreßprofilen nur rechteckförmige Konturen, nämlich Kastenaufbauten, möglich.

Bei der aus der AT-B-343 490 bekannten Bauweise sind geschlossene Strangpreßprofile miteinander verbunden, die eine tragende Wagenkasten-Konstruktion bilden. Die beim Fahrbetrieb oder bei einem Zusammenstoß auftretenden Kräfte werden jedoch in einen separaten Rahmen eingeleitet, auf dem der Wagenkasten montiert ist.

Aus der DE-OS 35 43 929 ist bereits ein Personenkraftwagen bekannt, dessen Bodenrahmen und der darauf angeordnete Aufbau aus Leichtmetallprofilen hergestellt ist. Die Strangpreßprofile, die bei diesem Fahrzeug eine tragende Funktion haben, sind einstückig ausgebildet und weisen einen geschlossenen Profilquerschnitt auf. Die Verwendung solcher Strangpreßprofile hat den Nachteil, daß die Umform- und Verbindungstechnik schwierig sowie letztere zusätzlich nicht optimal ist. Der Einsatz geschlossener Strangpreßprofile bedingt außerdem höhere Werkzeugkosten, einen größeren Bearbeitungsaufwand und damit einhergehend eine schlechtere Materialausnutzung. Schließlich weisen die bekannten, geschlossenen Strangpreßprofile aufgrund ihrer Anordnung innerhalb einer Karosserie ein ungünstiges Steifigkeits-/Gewichts-Verhältnis im Vergleich zu einer entsprechenden Stahlblechkonstruktion auf.

Aus der EP-B-0 146 716 ist bereits ein Wagenkasten für Personenkraftwagen bekannt, dessen tragende Struktur aus Strangpreßprofilen besteht, die durch Knotenelemente miteinander verbunden sind. Die tragende Struktur besteht aus Leichtmetall. Die Knotenelemente können durch Schalenbauweise gebildet sein, wobei die Schalen in einem Gieß-, Spritz- oder Schmiedeverfahren hergestellt sind. Die bekannten Knotenelemente sind überwiegend großvolumige Teile, da sie beispielsweise das hintere Radhaus ersetzen. Solche großvolumigen Teile sind jedoch nur in geringen Stückzahl wirtschaftlich herstellbar. Durch das angewandte Gießverfahren ergeben sich große Wandstärken. Die mechanische Bearbeitung der Montageflächen ist relativ aufwendig. Ferner ist die Montagereihenfolge zur Verbindung der Strangpreßprofile durch die Knotenelemente miteinander problematisch, so daß hierfür Ausklinkungen zur leichteren Montage vorgesehen sein müssen.

Ferner ist aus der EP-A-0 303 431 bereits ein Rahmen bekannt, der aus einem einzigen Endlos-Strangpreßprofil besteht und entsprechend nur an einer einzigen Stelle eine Schweißverbindung benötigt. Diese Bauweise ist jedoch in bezug auf die Umformtechnik als auch in bezug auf die Fertigungstechnik schwierig zu handhaben. Ferner entstehen bei der Verarbeitung hohe Materialverluste. Aufgrund der großen Profilquerschnitte ergibt sich ein schlechtes Steifigkeits-/Gewichts-Verhältnis in bezug auf eine herkömmliche Stahlblechbauweise.

Aufgabe der vorliegenden Erfindung ist es, eine Karosserie für Fahrzeuge, insbesondere für Personenkraftwagen, zu schaffen, deren tragende Struktur aus Leichtmetall besteht, wobei diese Struktur ein günstiges Steifigkeits-/Gewichts-Verhältnis hat. Ferner ist es Aufgabe der Erfindung, Verfahren zur Herstellung einer solchen Karosserie für Fahrzeuge anzugeben.

Diese Aufgabe wird erfindungsgemäß bei einer Karosserie für Fahrzeuge der eingangs genannten Art durch die Merkmale des kennzeichnenden Teils des Anspruchs 1 gelöst. In bezug auf das Verfahren wird diese Aufgabe jeweils durch die Merkmale der Ansprüche 17 bis 20 gelöst.

Durch das Trennen bislang geschlossener Querschnitte von Strangpreßprofilen in ein offenes Außenhautprofil, das höchsten optischen Ansprüchen gerecht werden kann, und in ein innenliegendes, in die Karosseriestruktur fest einzubindendes, offenes Profil können optisch problematische Verbindungstechniken in den Innenraum des zu bildenden Profils verlegt werden. Ferner sind Versteifungen des aus den genannten beiden offenen Profilen zusammengesetzten Endprofils sowie der Knotenbereiche problemlos mittels Einlegeteilen durchführbar. Die Einlegeteile können Blechformteile sein, deren Form und Anordnung so gewählt sind, daß die Krafteinleitung und Kraftverteilung optimal ist, so daß eine höchstmögliche gewichtsnormierte Steifigkeit der Knotenverbindung gegeben ist. Eine besonders gute Krafteinleitung wird erreicht, wenn das betreffende Einlegeteil über Formschluß in dem Endprofil gehaltert ist, in dem beispielsweise Flansche des Einlegeteils in Aussparungen eingelegt sind, die in einem oder in beiden Strangpreßprofilen ausgebildet sind.

Durch eine volle Ausnutzung des verfügbaren Bauraumes ergibt sich eine größtmögliche gewichtsnormierte Steifigkeit der Strangpreßprofile, die dann sogar über dem Wert bei herkömmlicher Stahlblech-Bauweise liegen kann. Eine volle Ausnutzung des Bauraumes wird insbesondere dadurch erzielt, daß das Profil gleichzeitig als Außenhaut dient. Ferner wird die gewichtsnormierte Steifigkeit der Querschnitte der Strangpreßprofile dadurch gesteigert, daß die Wandstärke des Profilquerschnitts entsprechend der geforderten Festigkeit variabel ist, d. h. an Stellen, die eine hohe Festigkeit erfordern, ist die Wandstärke verdickt und an Stellen geringerer Festigkeitsanforderung ist die Wandstärke entsprechend dünner. Ferner kann auch die Form der Querschnittsflächen der einzelnen Wandabschnitte optimiert werden, so daß die Gesamtquerschnittsfläche eine optimale gewichtsnormierte Steifigkeit ergibt. Durch eine Änderung des Wandstärkenverlaufs in Richtung des Innenraums des Strangpreßprofils können die Außenabmessungen des zusammengesetzten Strangpreßprofils kleingehalten werden, bzw. es kann die gleiche Außenkontur wie bei einer Stahlblech-Bauweise beibehalten werden.

In bezug auf die Optik sind besondere Stylingmerkmale z. B. dadurch möglich, daß die Grundstruktur lackiert und der Seitenrahmen eloxiert, poliert oder eingefärbt ist. Durch die Verwendung offener Profile ist eine einfachere Umformung möglich. Ferner sind die Montageflächen leichter zugänglich und zu bearbeiten. Auch die Montage der gesamten Karosserie ist vereinfacht, da die Befestigung der Querträger durch Einlegen in dafür ausgebildete Aussparungen und nicht durch ein Zusammenstecken von Zapfen und entsprechend geformte Öffnungen erfolgt.

Schließlich können durch eine besondere Gestaltung der Strangpreßprofile weitere Funktionen erfüllt werden: Durch die Ausbildung von durchlaufenden Schraubkanälen ist eine einfache Befestigung von beispielsweise Verkleidungsteilen möglich. Ferner können an den Stangpreßprofilen Schweißflansche angeordnet sein, die beispielsweise zur Anbindung von Füllblechen für beispielsweise Sandwichböden dienen. Auch können die Strangpreßprofile mit Auflageflächen für die Fensterscheiben sowie mit Befestigungsprofilen zur Anordnung von Dichtungen versehen sein. Der Innenraum des zusammengesetzten Strangpreßprofils kann beispielsweise als Kabelkanal oder für Leitungen für Kraftstoff oder Hydrauliköl dienen.

In einer besonders bevorzugten Ausführungsform sind die erfindungsgemäßen Strangpreßprofile zur Herstellung der Seitenrahmen vorgesehen, wobei der Seitenrahmen die A-, B-, C- und ggf. die D-Säule sowie den damit verbundenen Schwellerkasten und den Dachrahmen umfaßt. An den Knotenpunkten können sowohl Blechformteile, Gußteile, zusammengesetzte Strangpreßprofile und geschlossene Strangpreßprofile miteinander verbunden werden.

Ausführungsformen der Erfindung werden anhand der Zeichnungen beispielshalber beschrieben. Dabei zeigen:
- Fig. 1: in einer Explosionsdarstellung eine perspektivische Ansicht eines geteilten Seitenrahmens am oberen Ende der A-Säule eines Personenkraftwagens, mit Schnittansichten I bis V;
- Fig. 2: eine perspektivische Ansicht eines Schwellerkastens im Bereich der B-Säule, mit Schnittansichten I und II, wobei auf den Schwellerkasten ein Träger aus Blechformteilen aufgesetzt ist und
- Fig. 3: eine perspektivische Ansicht eines Schwellerkastens im Bereich der B-Säule, bei dem im Innenraum des Schwellerkastens ein Träger aus Blechformteilen eingebunden ist.

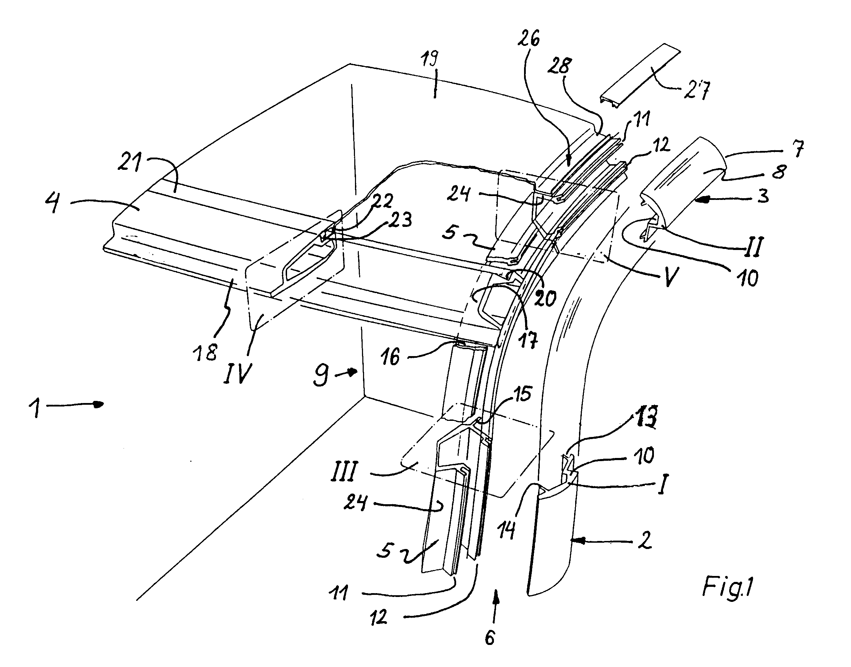

Die Fig. 1 zeigt in einer Explosionsdarstellung eine perspektivische Ansicht des Übergangs zwischen einer A-Säule 2, eines Fahrzeuges 1 und eines Dachrahmens 3. Ferner geht aus der Fig. 1 die Anbindung eines Querträgers 4 an einem inneren Strangpreßprofil 5 hervor. Schließlich zeigen Schnittdarstellungen I bis V verschiedene Querschnittsformen von offenen bzw. geschlossenen Strangpreßprofilen.

Der Seitenrahmen 6 wird durch das innere Strangpreßprofil 5 und das äußere Strangpreßprofil 7 gebildet. Das äußere Strangpreßprofil 7 weist eine nach außen zeigende, fertig bearbeitete Oberfläche 8 auf, die gleichzeitig als Außenhaut dient. An dem äußeren Strangpreßprofil 7 ist ein zum Innenraum 9 zeigendes Profil 10 ausgebildet, das einen gleichbleibenden Verlauf über seine gesamte Länge aufweist, wie dies aus den Schnittdarstellungen I und II hervorgeht. Aus den Schnittdarstellugen I und II geht ferner der ungleichmäßige Wandstärkenverlauf des Strangpreßprofils 7 hervor. Zur Verbindung mit entsprechend ausgebildeten Nuten 11 und 12 am innenliegenden Strangpreßprofil 5 sind Stege 13 und 14 am Profil 7 angeformt. Das innere Strangpreßprofil 5 ist einstückig mit konstantem Querschnitt entsprechend den geometrischen Anforderungen ausgebildet. In einer anderen Ausführungsform kann das innere Strangpreßprofil 5 aus zwei Profilen zusammengesetzt sein, wobei die Profile auch unterschiedliche Querschnitte aufweisen können. Nach der Schnittdarstellung III in einer horizontalen Ebene weist das Strangpreßprofil 5 einen Befestigungsflansch 15 für eine Türdichtung auf. An dem Strangpreßprofil 5 ist im Bereich der A-Säule ein Abschnitt 24 als ein Auflageflansch für eine Windschutzscheibe ausgebildet. Zur Befestigung des Querträgers 4 ist im Strangpreßprofil 5 eine der Querschnittsform des Querträgers 4 angepaßte Aussparung 16 ausgebildet, in die das Ende 17 des Querträgers 4 eingelegt ist. Die Querschnittsfläche des aus einem Strangpreßprofil bestehenden Querträgers 4 ist geschlossen und weist einen Auflageflansch 18 für die Windschutzscheibe auf. Wie aus der Schnittdarstellung IV erkennbar ist, ist in Richtung einer Dachaußenhaut 19 ein Absatz 20 mit L-förmigem Querschnitt zur Aufnahme eine Abdeckleiste 21 angeformt. Zur Verbindung der Abdeckleiste 21 mit dem Querträger 4 sind an dem Absatz 20 Stege 22 und 23 angeordnet, die in entsprechende, in der Abdeckleiste 21 ausgebildete Nuten eingreifen. Ferner ist an dem Absatz 20 des Querträgers 4 die Dachaußenhaut 19 mittels einer geeigneten Verbindungstechnik befestigt. An dem Abschnitt 24 des Strangpreßprofils 5 ist im Bereich des Dachrahmens 3 ein Seitenrand 28 der Dachaußenhaut 19 befestigt. Die Verbindungsstelle 26 zwischen der Dachaußenhaut 19 und dem Strangpreßprofil 5 wird mit einer Leiste 27 abgedeckt.

Bei der Montage des Seitenrahmens 6 wird zunächst das Ende 17 des Querträgers 4 in die beispielsweise durch Fräsen hergestellte Aussparung 16 im Strangpreßprofil 5 eingesteckt. Das Ende 17 des Querträgers 4 wird in der Aussparung 16 durch Schweißen, Kleben, Stecken, Verklammern usw. befestigt. Danach wird der Seitenrahmen 6 verschlossen, indem das äußere Strangpreßprofil 7 mit dem inneren Strangpreßprofil 5 verbunden wird. Die Verbindung kann durch Einkleben, Verklammern, Einhalsen oder Kaltpreßschweißen erfolgen. Das Schließen des Strangpreßprofils 5 durch das äußere Strangpreßprofil 7 kann auch erst nach einer Lackierung der Grundstruktur erfolgen.

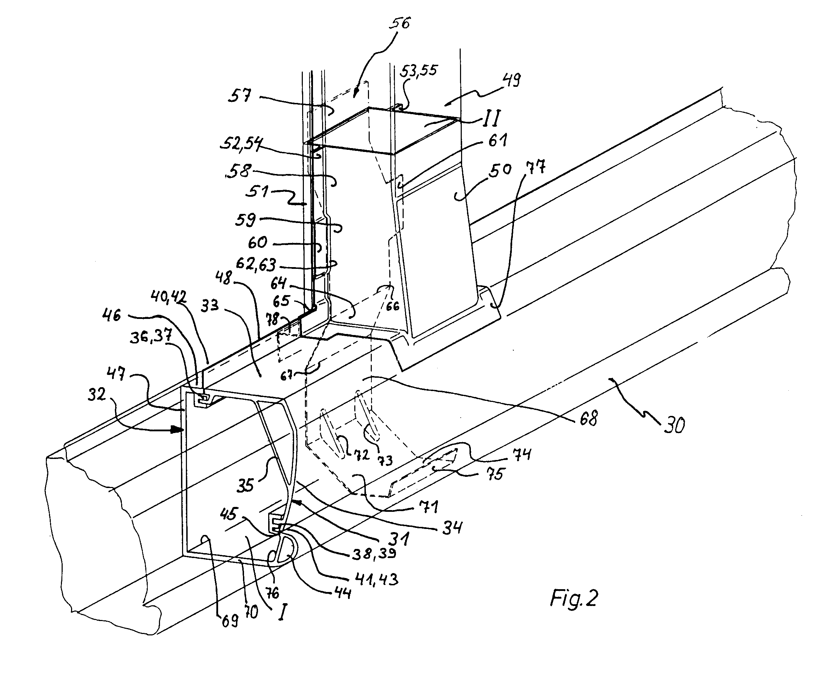

In der Fig. 2 ist ein Schwellerkasten 30 aus einem äußeren Strangpreßprofil 31 und einem inneren Strangpreßprofil 32 aufgebaut, die jeweils einen offenen Profilquerschnitt aufweisen, wie dies aus der Schnittdarstellung I ersichtlich ist. Das äußere Strangpreßprofil 31 weist einen in etwa L-förmigen Querschnitt auf, der einen horizontalen, ebenen Abschnitt 33 und einen gekrümmten, im wesentlichen senkrecht verlaufenden Abschnitt 34 aufweist. Die beiden Abschnitte 33 und 34 sind ferner durch einen schräg angeordneten und durchlaufenden Versteifungssteg 35 miteinander verbunden. Die Befestigung des äußeren Strangpreßprofils 31 mit dem inneren Strangpreßprofil 32 erfolgt über Nuten und Stege 36, 37, 38 und 39, die jeweils an den gegenüberliegenden Enden 40 bis 43 der Strangpreßprofile 31 und 32 ausgebildet sind. Auch das innere Strangpreßprofil 32 weist einen in etwa L-förmigen Profilquerschnitt auf. In der Nähe des unteren Endes 41 ist zur Versteifung ein Abschnitt 44 mit einem D-förmigen Querschnitt angeordnet, an dessen oberen Ende 45 die Nut 38 zur Befestigung mit dem am äußeren Strangpreßprofil 31 angeformten Steg 39 ausgebildet ist. Am oberen Ende 40 des inneren Strangpreßprofils 32 ist ein kurzer, waagrechter Abschnitt 46 an einem senkrechten Abschnitt 47 angeformt, an dem das mit der Nut 36 versehene Profil und ein nach oben gerichteter, senkrechter Befestigungsflansch 48 ausgebildet ist.

Auf den Schwellerkasten 30 ist ein Träger 49 aufgesetzt, der aus zwei miteinander verbundenen Blechformteilen 50 und 51 besteht. Im vorliegenden Fall kann der Träger 49 die B-Säule sein. Der Träger 49 hat einen rechteckförmigen Querschnitt, wie dies aus der Schnittdarstellung II ersichtlich ist. Die Blechformteile 50, 51 weisen jeweils einen hutförmigen Querschnitt auf. Die einander zugewandten seitlichen Flansche 52 bis 55 sind durch bekannte Verbindungstechniken wie Schweißen oder Kleben usw. miteinander verbunden. Zur Versteifung ist ein als Blechstreifen ausgebildetes Einlegeteil 56 in den Träger 49 sowie in den Schwellerkasten 30 integriert. Ein oberer, rechteckförmiger, senkrecht angeordneter Abschnitt 57 ist an der Innenseite des Blechformteiles 51 befestigt. An den Abschnitt 57 schließt sich ein schräg zur Trägermitte bzw. nach außen und nach unten verlaufender Abschnitt 58 an, der in der Höhe der Flansche 52 und 53 endet. Auf den Abschnitt 58 folgt ein senkrecht verlaufender Abschnitt 59, an dessen seitlichen Rändern Flansche 60 und 61 angeformt sind, die mit den Flanschen 52 bis 55 der Blechformteile 50, 51 verbunden sind. Für eine bessere Krafteinleitung sind in der gezeigten Ausführungsform in den gegenüberliegenden Flanschen 52, 53 des Blechformteiles 50 jeweils der Größe der Flansche 60, 61 angepaßte Vertiefungen 62 und 63 ausgebildet. Dient der Träger 49 als B-Säule, dann sind die formschlüssigen Befestigungen der Flansche 60, 61 des Einlegeteils 56 in Höhe der Befestigungseinrichtung für den Sicherheitsgurt angeordnet, um eine zusätzliche Wandstärkenverdickung zu erreichen. An den Abschnitt 59 schließt sich ein schräg zur Profilwand bzw. nach innen verlaufender Abschnitt 64 an, der durch eine in dem waagrechten Abschnitt 46 des inneren Strangpreßprofils 32 ausgebildete Aussparung bzw. Durchgangsöffnung 65 hindurchgeführt ist. Im montierten Zustand des Einlegeteils 56 befindet sich das obere Ende 66 des Abschnittes 64 bzw. der Übergang zwischen dem Abschnitt 59 und dem Abschnitt 64 in der Höhe der Aussparung 65. Das andere Ende 67 des Abschnittes 64 bzw. der Übergang zwischen dem Abschnitt 64 und einem Abschnitt 68 liegt an dem senkrechten Abschnitt 47 des Strangpreßprofils 32 an. Auf den Abschnitt 64 folgt der senkrechte Abschnitt 68, der mit dem Abschnitt 47 des inneren Strangpreßprofils 32 verbunden ist. Beabstandet von einer Ecke 69 zwischen dem senkrechten Abschnitt 47 und einem unteren, waagrechten Abschnitt 70 des inneren Strangpreßprofils 32 schließt sich an den Abschnitt 68 des Einlegeteils 56 ein schräg nach außen verlaufender Abschnitt 71 an, der über zwei voneinander beabstandete, dreieckförmige Rippen 72 und 73 mit dem Abschnitt 68 formsteif verbunden ist. Der schräge Abschnitt 71 endet mit einem Abstand von der Ecke 69 an dem waagrechten Abschnitt 70 des inneren Strangpreßprofils 32. Auf den schrägen Abschnitt 71 folgt ein waagrechter Abschnitt 74, der mit dem waagrechten Abschnitt 70 des inneren Strangpreßprofils verbunden ist. An den Abschnitt 74 schließt sich ein schräg nach oben und nach außen verlaufender Abschnitt 75 an, der an einer Rückseite 76 des rohrförmigen Abschnittes 44 befestigt ist.

Die Verbindung des Trägers 49 mit dem Schwellerkasten 30 erfolgt über an den Blechformteilen 50 und 51 ausgebildete umlaufende Befestigungsflansche 77 und 78. Die Befestigungsflansche 77 und 78 sind der Kontur der Außenoberflächen der Strangpreßprofile 31 und 32 angepaßt und mit diesen einschließlich des Befestigungsflansches 48 des inneren Strangpreßprofiles 32 über bekannte Verbindungstechniken verbunden. Durch die Befestigungsflansche 77, 78 wird eine Wandstärkenaufdickung in dem besonders beanspruchten Übergangsbereich zwischen Träger 49 und Schwellerkasten 30 erreicht.

Die Montage erfolgt dadurch, daß zunächst an dem inneren Strangpreßprofil 32 das Blechformteil 51 über den Befestigungsflansch 78 befestigt wird. Anschließend wird das Einlegeteil 56 mit dem Blechformteil 51 sowie dem inneren Strangpreßprofil 32 verbunden. Danach wird der Schwellerkasten 30 durch Einkleben, Verklammern, Einhalsen, Kaltpreßschweißen oder andere Verbindungstechniken des äußeren Strangpreßprofiles 31 verschlossen. Zum Schluß erfolgt das Schließen des Trägers 49 durch Aufsetzen des Blechformteiles 50, das über seine Flansche 52, 53 und 77 mit dem Blechformteil 50 bzw. dem äußeren Strangpreßprofil 31 verbunden wird.

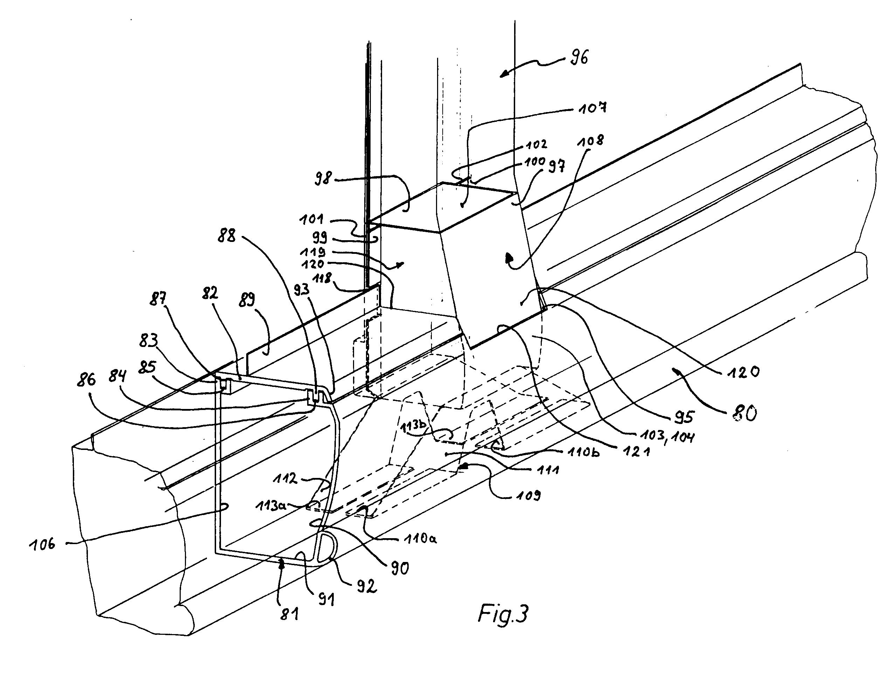

In der Fig. 3 besteht ein Schwellerkasten 80 aus einem unteren und einem oberen Strangpreßprofil 81 und 82. Das untere Strangpreßprofil 81 weist einen weitestgehend U-förmigen Querschnitt auf, während das obere Strangpreßprofil 82 im wesentlichen einen schmalen, rechteckförmigen Querschnitt hat. An den nach oben zeigenden Enden 83 und 84 des unteren Strangpreßprofils 81 sind jeweils eine Nut 85 und 86 ausgebildet, in der am oberen Strangpreßprofil 82 angeformte Stege 87 und 88 befestigt sind. Am oberen Strangpreßprofil 82 ist ferner ein senkrecht angeordneter Befestigungsflansch 89 ausgebildet. An einem äußeren, senkrechten Abschnitt 90 des unteren Strangpreßprofils 81 ist in der Nähe des Übergangs zu einem unteren, waagrechten Abschnitt 91 ein Abschnitt 92 ausgebildet, der einen D-förmigen Querschnitt aufweist. Am oberen Strangpreßprofil 82 ist zur Abdeckung der Verbindung zwischen der Nut 86 und dem Steg 88 eine nach unten geneigte und mit dem senkrechten Abschnitt 90 des unteren Strangpreßprofils 81 fluchtende Kante 93 angeformt. In den Schwellerkasten 80 ist zur Befestigung eines vormontierten Trägers 96 eine, von oben gesehen, rechteckförmige Ausklinkung 95 ausgebildet. Zur Herstellung der Ausklinkung 95 ist am oberen Ende 83 des unteren Strangpreßprofils 81 das die Nut 85 aufweisende Profil entsprechend der Länge des Trägers 96 in Fahrzeuglängsrichtung entfernt. Die Ausklinkung 95 erstreckt sich danach über die gesamte Breite des oberen Strangpreßprofils 83 in Fahrzeugquerrichtung sowie darüber hinaus um einen Betrag, der den äußeren Abmessungen des Trägers 96 entspricht.

Der Träger 96 besteht aus zwei miteinander verbundenen Blechformteilen 97 und 98. Die Blechformteile 97 und 98 bilden im miteinander verbundenen Zustand einen Hohlkörper 107 mit rechteckförmigem Querschnitt. Die Verbindung der beiden Blechformteile 97 und 98 miteinander erfolgt über jeweils seitlich angeordnete Flansche 99 bis 102. Das Blechformteil 97 weist an einem Abschnitt 108 eine nach außen gerichtete Ausbauchung 103 auf, die über dem nach außen gerichteten, senkrecht verlaufenden Abschnitt 104 an dem entsprechend geformten senkrechten Abschnitt 90 des unteren Strangpreßprofils 81 befestigt ist. Der Abschnitt 108 beginnt außerhalb des Schwellerkastens 80 und endet im oberen Bereich des senkrechten Abschnittes 90 des unteren Strangpreßprofils 81. Bis zu diesem Ende des Abschnittes 108 weist das Blechformteil 97 einen hutförmigen Querschnitt auf. Zur Erreichung einer besseren Krafteinleitung schließt sich an den Abschnitt 108 ein Abschnitt 109 an, der über Flansche 110a und 110b an dem waagrechten Abschnitt 91 des unteren Strangpreßprofils 81 befestigt ist. Die Flansche 110a und 110b sind über ein senkrecht verlaufendes Blechteil 111 mit dem Abschnitt 108 verbunden. Das zur Fahrzeuginnenseite hin angeordnete Blechformteil 98 weist ebenfalls bis zum Ende des Abschnittes 108 einen hutförmigen Querschnitt auf. Im Anschluß an diesen hutförmigen Querschnitt folgt ein von dem senkrechten Abschnitt 106 des unteren Strangpreßprofils 81 beabstandetes senkrecht verlaufendes Blechteil 112, an dessen unterem Ende jeweils waagrechte Flansche 113a und 113b ausgebildet sind, die an dem waagrechten Abschnitt 91 des unteren Strangpreßprofils 81 befestigt sind. Das Blechteil 112 weist in Fahrzeuglängsrichtung gesehen einen in etwa Z-förmig Verlauf auf, während das Blechteil 111 spiegelbildlich dazu ausgebildet ist. In Fahrzeugquerrichtung gesehen haben die Blechteile 111 und 112 in etwa die Form eines Trapezes. In Höhe des Befestigungsflansches 89 des oberen Strangpreßprofils 82 sind beidseitig in den jeweiligen Flanschen 99 bis 102 der Blechformteile 97 und 98 rechteckförmige Aussparungen 118 ausgebildet, so daß für die Flansche 99 bis 102 keine Aussparung im oberen Strangpreßprofil 82 ausgebildet sein muß. Aufgrund der Ausklinkung 95 ist das obere Strangpreßprofil 82 in zwei Teile getrennt. An den jeweiligen Stoßstellen 120 zwischen den entsprechenden Enden des oberen Strangpreßprofils 82, einschließlich des Befestigungsflansches 89, und den Außenoberflächen 119 des Trägers 96 erfolgt eine unlösbare Verbindung.

Die Montage des Trägers 96 mit dem Schwellerkasten 80 wird nachfolgend beschrieben. Zunächst wird der Träger 96 vormontiert, indem die Blechformteile 97 und 98 über die Flansche 99 bis 102 durch eine geeignete Verbindungstechnik miteinander verbunden werden. Anschließend wird der vormontierte Träger 96 in das offene, untere Strangpreßprofil 81 positionsgerecht eingeführt und an den senkrechten Abschnitten 90 und 106 sowie am waagrechten Abschnitt 91 des unteren Strangpreßprofils 81 verbunden. Die Befestigung erfolgt zweckmäßigerweise durch Verklebung oder durch Verschweißung. Anschließend erfolgt das Schließen des unteren Strangpreßprofils 81 durch das jeweilige Strangpreßprofil 82. Die beiden Strangpreßprofile 81 und 82 können durch Einkleben, Verklammern, Einhalsen, Kaltpreßschweißen usw. miteinander verbunden werden. Abschließend werden die Stoßstellen 120 zwischen dem jeweiligen oberen Strangpreßprofil 82 und den entsprechenden Außenoberflächen 119 des Trägers 96 miteinander verschweißt. Ferner werden ebenfalls die Stoßstellen 121 zwischen den gegenüber liegenden Außenoberflächen 122 des Trägers 96 und des unteren Strangpreßprofils 81 miteinander verbunden.

In das untere Strangpreßprofil 81 können entsprechend den geforderten Steifigkeitsanforderungen zusätzlich Schottbleche oder sonstige Versteifungsteile befestigt werden, beispielsweise in der Nähe von Querträgern, die senkrecht zu dem Schwellerkasten 80 angeordnet sein können.

## Patentansprüche

1. Karosserie für Fahrzeuge, insbesondere Personenkraftwagen, die aus Leichtmetall besteht, wobei der Aufbau der Karosseriewände durch Strangpreßprofile gebildet ist, wobei die Strangpreßprofile zumindest für einen Teil der Karosserie aus zwei zueinander offenen Strangpreßprofilen zusammengesetzt sind, die nach der Verbindung miteinander einen geschlossenen Querschnitt aufweisen,
dadurch gekennzeichnet, daß die Strangpreßprofile (4; 5, 7; 31, 32; 81, 82) zu einer tragenden Struktur der Karosserie miteinander verbunden sind,
daß die Strangpreßprofile (5, 7; 31, 32; 81, 82), die einen Seitenrahmen (6) des Fahrzeuges bilden, aus einem inneren, zur Fahrzeugaußenseite hin offenen Strangpreßprofil (5, 31, 81) und einem äußeren, zur Fahrzeuginnenseite hin offenen Strangpreßprofil (7, 32, 82) bestehen,
daß das innere Strangpreßprofil (5, 31, 81) fest in die Karosseriestruktur eingebunden ist,
daß das äußere Strangpreßprofil (7, 32, 82) eine zur Fahrzeugaußenseite hin zeigende, fertig bearbeitete Oberfläche (8) aufweist, die gleichzeitig als Außenhaut dient und
daß der Querschnitt der Strangpreßprofile in seiner Form und/oder seiner Wanddicke entsprechend den zu erwartenden Steifigkeitsanforderungen gewichtsoptimiert ist.

2. Karosserie nach Anspruch 1, dadurch gekennzeichnet, daß die verwendeten Strangpreßprofile (5, 7; 31, 32; 81, 82; 4) weitestgehend die gleiche Kontur und die gleichen Außenabmessungen eines entsprechenden Stahlblechprofils einer vergleichbaren Karosserie in Stahlblech-Bauweise aufweisen.

3. Karosserie nach den Ansprüchen 1 oder 2, dadurch gekennzeichnet, daß die verwendeten Strangpreßprofile (5, 7; 31, 32; 81, 82; 4) durch eine geeignete Variation der Dicke und der Form des Wanddickenverlaufs in bezug auf das jeweilige Strangpreßprofil (5, 7; 31, 32; 81, 82; 4) ein Steifigkeits-/Gewichts-Verhältnis aufweisen, das abhängig von den geometrischen Verhältnissen über dem der StahlblechBauweise liegt.

4. Karosserie nach einem oder mehreren der vorhergehenden Ansprüche, dadurch gekennzeichnet, daß die Verbindung zwischen dem an einem Knotenpunkt aneinanderstoßenden, aus zwei offenen Profilen zusammengesetzten Strangpreßprofil (5, 7; 31, 32; 81, 82) und einem weiteren Träger-Bauteil (4, 49, 96) zumindest teilweise im Innenraum des zusammengesetzten Strangpreßprofils (5, 7; 31, 32; 81, 82) und/oder des Träger-Bauteils (4, 49, 96) über Formschluß und/oder Kraftschluß und/oder Reibschluß erfolgt.

5. Karosserie nach einem oder mehreren der vorhergehenden Ansprüche, dadurch gekennzeichnet, daß die aus zwei Teilen zusammengesetzten Strangpreßprofile (5, 7) an einem oder mehreren Knotenpunkten mit einteiligen Strangpreßprofilen (4) verbunden sind.

6. Karosserie nach einem oder mehreren der vorhergehenden Ansprüche, dadurch gekennzeichnet, daß die Verbindung des einteiligen Strangpreßprofils (4) mit dem zusammengesetzten, zweiteiligen Strangpreßprofil (5, 7) über jeweils eine Aussparung (16) erfolgt, die in einem zur Fahrzeuginnenseite hin angeordneten Strangpreßprofil (5) ausgebildet ist.

7. Karosserie nach einem oder mehreren der vorhergehenden Ansprüche, dadurch gekennzeichnet, daß an den Strangpreßprofilen (4, 5, 7) Profile oder dgl. (22, 23) zur Befestigung jeweils einer Abdeckleiste (21, 27) ausgebildet sind, die die Verbindung der Strangpreßprofile (4, 5, 7) mit der Außenhaut (19) abdeckt.

8. Karosserie nach einem oder mehreren der vorhergehenden Ansprüche, dadurch gekennzeichnet, daß durch die Abdeckleiste (21) die Verbindung zwischen dem Strangpreßprofil (4) und dem Strangpreßprofil (5) abgedeckt ist und daß die jeweilige Stirnseite des Strangpreßprofils (4) durch die Abdeckleiste (27) und/oder das äußere Strangpreßprofil (7) geschlossen ist.

9. Karosserie nach einem oder mehreren der vorhergehenden Ansprüche, dadurch gekennzeichnet, daß an einem oder mehreren Knotenpunkten zusammengesetzte Strangpreßprofile (5, 7; 31, 32; 81, 82) miteinander verbunden sind.

10. Karosserie nach einem oder mehreren der vorhergehenden Ansprüche, dadurch gekennzeichnet, daß an einem oder mehreren Knotenpunkten an den zusammengesetzten Strangpreßprofilen (31, 32; 81, 82) Blechformteile (49, 96) und/oder Gußteile befestigt sind.

11. Karosserie nach einem oder mehreren der vorhergehenden Ansprüche, dadurch gekennzeichnet, daß die Befestigung der Blechformteile (49) über in das zusammengesetzte Strangpreßprofil (31, 32) integrierte und befestigte Einlegeteile (56) erfolgt.

12. Karosserie nach einem oder mehreren der vorhergehenden Ansprüche, dadurch gekennzeichnet, daß das Einlegeteil (56) zusätzlich formschlüssig mit dem Blechformteil (49) verbunden ist.

13. Karosserie nach einem oder mehreren der vorhergehenden Ansprüche, dadurch gekennzeichnet, daß das Blechformteil (49, 96) entweder auf das bereits zusammengesetzte Strangpreßprofil (31, 32) aufgesetzt ist oder im Inneren des Strangpreßprofils (81, 82) eingebunden ist.

14. Karosserie nach einem oder mehreren der vorhergehenden Ansprüche, dadurch gekennzeichnet, daß in dem zusammengesetzten Strangpreßprofil (5, 7; 31, 32; 81, 82) sich über die Querschnittsfläche erstreckende Versteifungs- oder Schottbleche an Stellen mit höherer Steifigkeitsanforderung eingefügt sind.

15. Karosserie nach einem oder mehreren der vorhergehenden Ansprüche, dadurch gekennzeichnet, daß in und/oder an den Strangpreßprofilen (4; 5, 7; 31, 32; 81, 82) Profile für Zusatzfunktionen ausgebildet sind, insbesondere Schraubkanäle, Schweißflansche, Auflageflächen und Profilinnenräume zum Verlegen von Leitungen.

16. Karosserie nach einem oder mehreren der vorhergehenden Ansprüche, dadurch gekennzeichnet, daß der Träger (69) aus Blechformteilen (97, 98) und/oder aus Gußteilen hergestellt ist.

17. Verfahren zur Herstellung einer Karosserie für Fahrzeuge nach den Ansprüchen 1 bis 16,
dadurch gekennzeichnet, daß bei der Montage eines geteilten Seitenrahmens (6) das jeweilige Ende (17) eines anzubindenden Profils (4) in eine entsprechende, im innenliegenden Strangpreßprofil (5) ausgebildete Aussparung (16) eingelegt oder eingesteckt wird,
daß das anzubindende Profil (4) mit dem inneren Strangpreßprofil (5) durch eine geeignete Verbindungstechnik verbunden wird,
daß der Seitenrahmen (6) über eine geeignete Verbindungstechnik durch das äußere Strangpreßprofil (7) verschlossen wird,
daß danach die Außenhautteile (19) und/oder Fensterscheiben auf die entsprechenden Flansche (18) oder Profile aufgelegt und durch geeignete Verbindungstechniken mit dem jeweiligen Strangpreßprofil (4, 5) verbunden werden und
daß diese Verbindungsstellen durch Abdeckleisten (21, 27) abgedeckt werden.

18. Verfahren zur Herstellung einer Karosserie eines Fahrzeuges nach den Ansprüchen 1 bis 16, dadurch gekennzeichnet, daß bei der Montage eines Trägers (49) aus Blechformteilen (50, 51) mit einem zusammengesetzten, zweiteiligen Strangpreßprofil (31, 32) zunächst das innenliegende Blechformteil (51) in das offene Profil eines ersten Strangpreßprofils (32) eingesetzt wird und dort mittels geeigneter Verbindungstechniken befestigt wird,
daß anschließend bei Bedarf ein Einlegeteil (56) verwendet wird, das mit dem innenliegenden Blechformteil (51) und dem ersten Strangpreßprofil (32) verbunden wird,
daß danach das erste Strangpreßprofil (32) durch ein zweites Strangpreßprofil (32) über eine geeignete Verbindungstechnik verschlossen wird und
daß der Träger (49) durch das Aufsetzen eines äußeren Blechformteiles (50) verschlossen wird, wobei die Blechformteile (50, 51) über Befestigungsflansche (77, 78) an den Strangpreßprofilen (31, 32) befestigt werden.

19. Verfahren zur Herstellung einer Karosserie für Fahrzeuge nach den Ansprüchen 1 bis 16, dadurch gekennzeichnet, daß bei der Montage eines Trägers (96) mit einem zusammengesetzten, zweiteiligen Strangpreßprofil (81, 82) der Träger (96) zunächst vollständig zusammengesetzt und falls erforderlich mit Einlege-Teilen versehen wird,
daß der vormontierte Träger (96) in ein erstes, offenes Strangpreßprofil (81) eingebunden wird,
daß das erste Strangpreßprofil (81) durch ein zweites Strangpreßprofil (82) verschlossen wird und
daß die Stoßstellen (120, 121) zwischen dem Träger (96) und den Strangpreßprofilen (81, 82) verschweißt werden.

20. Verfahren nach Anspruch 19, dadurch gekennzeichnet, daß der Träger (96) aus Blechformteilen (97, 98) zusammengesetzt wird.

## Claims

1. A vehicle body, especially a passenger car body, made of light metal, the walls of the body being made from extruded section members which, in the case of at least a part of the body, are made up of two facing open extruded section members which have a closed cross-section after being joined, characterised in that the extruded section members (4; 5, 7; 31, 32; 81, 82) are connected together to form a body-bearing structure; that the extruded section members (5, 7; 31, 32; 81, 82) forming one side frame (6) of the vehicle comprise an inner member (5, 31, 81) open towards the outside of the vehicle and an outer member (7, 32, 82) open towards the inside of the vehicle; that the inner member (5, 31, 81) is permanently incorporated in the body structure; that the outer member (7, 32, 82) has a fully-machined surface (8) pointing towards the outside of the vehicle and also serving as an outer skin; and that the cross-section of the extruded section members, in its shape and/or wall thickness, results in optimum weight under the expected rigidity requirements.

2. A body according to claim 1, characterised in that the extruded section members (5, 7; 31, 32; 81, 82; 4) have substantially the same contour and the same outer dimensions as a corresponding sheet-steel section member in a comparable body made of sheet steel.

3. A body according to claim 1 or 2, characterised in that the section members (5, 7; 31, 32; 81, 82; 4) have a wall which varies in thickness and shape relative to the respective section member (5, 7; 31, 32; 81, 82; 4) so as to obtain a rigidity/weight ratio which, depending on the geometrical conditions, is above that of a sheet-steel construction.

4. A body according to one or more of the preceding claims, characterised in that the connection between an extruded member (5, 7; 31, 32; 81, 82) made up of two open section members abutting at a junction and an additional bearer member (4, 49, 96) is by positive and/or non-positive and/or frictional engagement at least partly in the interior of the assembled section member (5, 7; 31, 32; 81, 82) and/or the bearer member (4, 49, 96).

5. A body according to one or more of the preceding claims, characterised in that the section members (5, 7) made up of two parts are connected at one or more junctions to one-part extruded section members (4).

6. A body according to one or more of the preceding claims, characterised in that the one-part member (4) is connected to the assembled two-part member (5, 7) via respective recesses (16) formed in an extruded section member (5) disposed towards the inside of the vehicle.

7. A body according to one or more of the preceding claims, characterised in that section members or the like (22, 23) for securing a respective cover strip (21, 27) are formed on the extruded section members (4, 5, 7) so as to cover the connection between the members (4, 5, 7) and the outer skin (19).

8. A body according to one or more of the preceding claims, characterised in that the strip (21) covers the connection between the member (4) and the member (5), and the respective end face of the member (4) is closed by the strip (27) and/or the other member (7).

9. A body according to one or more of the preceding claims, characterised in that extruded section members (5, 7; 31, 32; 81, 82) fitted together at one or more junctions are connected together.

10. A body according to one or more of the preceding claims, characterised in that sheet-metal moulded parts (49, 96) and/or cast parts are secured to the section members (31, 32; 81, 82) fitted together at one or more junctions.

11. A body according to one or more of the preceding claims, characterised in that the sheet-metal moulded parts (49) are secured via insertion parts (56) which are incorporated and secured in the fitted-together section members (31, 32).

12. A body according to one or more of the preceding claims, characterised in that the insertion part (56) is also positively connected to the sheet-metal part (49).

13. A body according to one or more of the preceding claims, characterised in that the sheet-metal part (49, 96) is either mounted on the already-assembled member (31, 32) or incorporated inside the member (81, 82).

14. A body according to one or more of the preceding claims, characterised in that reinforcing or bulkhead sheets extending across the cross-sectional area are inserted into the fitted-together member (5, 7; 31, 32; 81, 82) at places where higher rigidity is required.

15. A body according to one or more of the preceding claims, characterised in that section members for additional functions, more especially screw ducts, welding flanges, bearing surfaces and sectional spaces for laying pipes, are formed in and/or on the members (4; 5, 7; 31, 32; 81, 82).

16. A body according to one or more of the preceding claims, characterised in that the bearer (69) is made from sheet-metal parts (97, 98) and/or from cast parts.

17. A method of producing a body for vehicles according to claims 1 to 16, characterised in that, during assembly of a divided side frame (6), the respective end (17) of a section member (4) for joining is placed in or inserted into a corresponding recess (16) formed in the interior extruded section member (5); that the section member (4) for joining is connected by a suitable method to the inner member (5); that the side frame (6) is closed by the outer member (7) by a suitable method; that the outer skin parts (19) and/or windows are thereafter placed on the corresponding flanges (18) or section members and joined to the respective member (4, 5) by suitable methods; and that the connecting places are covered by strips (21, 27).

18. A method of producing a vehicle body according to claim 1 to 16, characterised in that, when a bearer (49) is assembled from sheet-metal parts (50, 51) comprising a fitted-together two-part extruded section member (31, 32), first the inner sheet-metal part (51) is inserted into the open cross-section of a first member (32) and is secured there by suitable methods, whereupon if necessary an insertion part (56) is used and is connected to the inner sheet-metal part (51) and to the first member (32); that the first member (32) is thereafter closed by a second member (32) by a suitable method; and that the bearer (49) is closed by fitting an outer sheet- metal part (50), the parts (50, 51) being secured to the members (31, 32) by connecting flanges (77, 78).

19. A method of producing a vehicle body according to claims 1 to 16, characterised in that, when a bearer (96) comprising a fitted-together two-part extruded section member (81, 82) is assembled, the bearer (96) is first completely fitted together and, if necessary, is provided with insertion parts; that the pre-assembled bearer (96) is incorporated in a first open section member (81); that the first section member (81) is closed by a second section member (82); and that the joints (120, 121) between the bearer (96) and the section members (81, 82) are welded.

20. A method according to claim 19, characterised in that the bearer (96) is fitted together from sheet- metal part (97, 98).

## Revendications

1. Carrosserie de véhicule automobile, en particulier de tourisme réalisée en métal léger et dont les flancs latéraux sont faits de profilés extrudés et qui pour au moins une partie de cette carrosserie, sont constitués par des profilés ouverts réunis de manière à former des profilés fermés, caractérisée en ce que :
- les profilés (4; 5, 7; 31, 32; 81, 82) sont réunis entre eux de manière à donner une structure porteuse à la carrosserie du véhicule.
- les profilés (5, 7; 31, 32; 81, 82) constituant un cadre latéral (6) de la structure de véhicule, sont composés d'un profilé intérieur (5, 31, 81) ouvert vers l'extérieur du véhicule et d'un profilé extérieur (7, 32, 82) ouvert vers l'intérieur du véhicule.
- le profilé intérieur (5, 31, 81) est intégré à la structure de la carrosserie du véhicule.
- le profilé extérieur (7, 32, 82) présente, dirigée vers l'extérieur, une surface externe (8) totalement usinée, constituant également le bardage du véhicule.
- les sections des profilés, par leurs formes et/ou par leurs épaisseurs, sont optimisées, en ce qui concerne le poids, en fonction des contraintes de rigidité envisagées.

2. Carrosserie selon la revendication 1, caractérisée ne ce que les profilés extrudés utilisés (5, 7; 31, 32; 81, 82); 4) présentent le plus possible la même forme et les mêmes dimensions externes que le profilé correspondant d'une carrosserie comparable réalisée en tôle d'acier.

3. Carrosserie selon la revendication 1 ou 2, caractérisée en ce que les profilés extrudés utilisés (5, 7; 31, 32; 81, 82; 4), grâce à une variation appropriée de l'épaisseur et de la forme des parois du profilé considéré (5, 7; 31, 32; 81, 82; 4) présentent un rapport rigidité/poids qui, en fonction des conditions géométriques, est supérieur à celui d'une réalisation en acier.

4. Carrosserie selon une ou plusieurs des revendications précédentes, caractérisée en ce qu'au point de rencontre entre un profilé (5, 7; 31, 32; 81, 82) formé par l'assemblage de deux profilés ouverts, et un élément porteur (4, 49, 96), éventuellement logé au moins partiellement à l'intérieur du profilé (5, 7; 31, 32; 81, 82), il existe au niveau des joints une liaison par combinaison de formes et/ou par force et/ou par frottement.

5. Carrosserie selon une ou plusieurs des revendications précédentes, caractérisée en ce que les profilés (5, 7) en deux parties sont reliés, au niveau d'un ou plusieurs points de jonction, à des profilés (4) faits d'une seule partie.

6. Carrosserie selon une ou plusieurs des revendications précédentes, caractérisée en ce que la liaison du profilé par extrusion monobloc (4) avec la profilé (5,7) en deux parties est assurée à travers une découpe (16) pratiquée dans un profilé (5), disposé vers l'intérieur du véhicule.

7. Carrosserie selon une ou plusieurs des revendications précédentes, caractérisée en ce que les profilés extrudés (4, 5, 7) comportent des éléments d'origine (22, 23) servant chacun à fixer une baguette de couverture (21, 27) assurant la liaison entre les profilés (4, 5, 7) et le bardage extérieur (19) du véhicule.

8. Carrosserie selon une ou plusieurs des revendications précédentes, caractérisée en ce que la baguette de couverture (21) recouvre le raccordement entre le profilé (4) et le profilé (5), la face frontale du profilé (4) étant obturée par la baguette (27) et/ou le profilé extérieur (7).

9. Carrosserie selon une ou plusieurs des revendications précédentes, caractérisée en ce que les profilés assemblés (5, 7; 31, 32; 81, 82) sont reliés entre eux au niveau d'un ou plusieurs points de jonction.

10. Carrosserie selon une ou plusieurs des revendications précédentes, caractérisée en ce que des pièces de forme en tôle (49, 96) et/ou des pièces moulées sont fixées aux profilés assemblés (31, 32; 81, 82) au niveau d'un ou plusieurs de leurs points de jonction.

11. Carrosserie selon une ou plusieurs des revendications précédentes, caractérisée en ce que la fixation des pièces de forme (49) en tôle est assurée par des inserts (56) intégrés et fixés dans le profil assemblé (31, 32).

12. Carrosserie selon une ou plusieurs des revendications précédentes, caractérisée en ce que l'insert (56) est relié complémentairement à la pièce de forme (49) en tôle, par combinaison de formes.

13. Carrosserie selon une ou plusieurs des revendications précédentes, caractérisée en ce que la pièce de forme (49, 96) en tôle est, soit montée sur le profilé extrudé (31, 32) déjà assemblé, soit encastrée à l'intérieur du profilé extrudé (81, 82).

14. Carrosserie selon une ou plusieurs des revendications précédentes, caractérisée en ce que des tôles de rigidification ou des goussets, disposés dans des plans transversaux, sont montés à l'intérieur du profilé assemblé (5, 7; 31, 32; 81, 82), aux endroits nécessitant un supplément de rigidité.

15. Carrosserie selon une ou plusieurs des revendications précédentes, caractérisée en ce que sur et/ou dans les profilés (4; 5, 7; 31, 32; 81, 82) il est prévu des éléments profilés remplissant des fonctions complémentaires, notamment des canaux de vissage, des brides de soudure ou d'appui, des chambres pour loger des canalisations.

16. Carrosserie selon une ou plusieurs des revendications précédentes, caractérisée en ce que le support (69) est constitué des pièces de forme en tôle (97, 98) et/ou des pièces moulées.

17. Procédé de fabrication d'une carrosserie de véhicule selon les revendications 1 à 16, présentant les caractéristiques suivantes :
- pour effectuer le montage d'un cadre latéral (6), fait de plusieurs parties, l'extrémité concernée (17) d'un profité (4) qu'il s'agit de relier est introduite ou emmanchée dans une découpe (16) du profilé (5) situé vers l'intérieur du véhicule.
- la liaison entre le profité (4) et le profité (5) est obtenue par l'application d'une technique appropriée.
- le cadre latéral (6) est obturé par le profilé extérieur (7) fixé par application d'une technique de liaison appropriée.
- ensuite, les pièces de bardage extérieur (19) et/ou les éléments vitrés sont placés sur les plages d'appui (18) correspondantes ou sur les profilés et fixées au profité correspondant (4, 5) par application d'une technique de liaison appropriée.
- les zones de liaison sont recouvertes par des baguettes de couverture (21, 27).

18. Procédé de fabrication d'une carrosserie de véhicule, selon les revendications 1 à 16, caractérisé en ce que pour réunir un support (49) constitué de pièces de forme (50, 51) en tôle et un profilé fait de deux profilés assemblés (31, 32), on introduit d'abord la pièce de forme (51) située vers l'intérieur du véhicule dans un premier profité (32) ouvert et on le fixe à un profilé par application d'une technique de liaison appropriée, ensuite, si besoin, on utilise un insert (56) que l'on relie à la pièce de forme en tôle (51) intérieure et au premier profité (32) que l'on obture au moyen du second profilé qui lui est relié par des moyens techniques appropriés, enfin le support (49) est recouvert et obturé par une pièce de forme en tôle (50) extérieure fixée, comme la pièce (51) par des brides (77, 78) aux profilés (31, 32).

19. Procédé de fabrication selon les revendications 1 à 16, caractérisé en ce que pour réunir un support (96) et un profilé (81, 82) fait de deux profilés assemblés, on commence par assembler entièrement le support (96), en le munissant le cas échéant de pièces placées en insert, puis on introduit le support (96) pré-monté dans le premier profilé en le réunissant au deuxième (82), enfin on soude les lignes de jointoiement (120, 121) entre le support (96) et les profilés (81, 82).

20. Procédé de fabrication selon la revendication 19, caractérisé en ce que le support est constitué par l'assemblage de pièces de forme (97, 98) en tôle.
